# EUROPÄISCHE PATENTSCHRIFT

(11) **EP 1 809 682 B1**
(45) Veröffentlichungstag und Bekanntmachung des Hinweises auf die Patenterteilung: **02.06.2010**
(21) Anmeldenummer: 05783634.8
(22) Anmeldetag: 17.09.2005
(51) Int. Cl.: C08G 18/80, C09D 175/00

(54) **VERFAHREN ZUR HERSTELLUNG VON MIT STERISCH ANSPRUCHSVOLLEN PHENOLEN BLOCKIERTEN POLYISOCYANATEN**
PROCESS FOR THE PREPARATION OF POLYISOCYANATES BLOCKED WITH STERICALLY DEMANDING PHENOLS
PROCÉDÉ DE PRÉPARATION DE POLYISOCYANATES BLOQUÉS PAR DES PHÉNOLS COMPLEXES SUR LE PLAN STÉRIQUE

(30) Priorität: 01.10.2004 DE 102004047921
(43) Veröffentlichungstag der Anmeldung: 25.07.2007
(73) Patentinhaber: Bayer MaterialScience AG, 51368 Leverkusen (DE)
(72) Erfinder: MAGER, Michael, 51375 Leverkusen (DE); SIMON, Joachim, 41515 Grevenbroich (DE); RICHTER, Frank, 51373 Leverkusen (DE)
(86) Internationale Anmeldenummer: PCT/EP2005/010052
(87) Internationale Veröffentlichungsnummer: WO 2006/037453

(56) Entgegenhaltungen:
- WO-A-01/23452
- WO-A-2004/046217
- WO-A-2004/058848
- US-A- 4 861 672

## Beschreibung

Die Erfindung betrifft die Verwendung von mit sterisch anspruchsvollen Phenolen blockierten Polyisocyanaten zur Herstellung von Beschichtungen, welche für den Kontakt mit Lebensmitteln und/oder Trinkwasser geeignet sind, sowie die Herstellung der entsprechend blockierten Polyisocyanate.

Blockierte Polyisocyanate werden in erster Linie zur Herstellung von Polyurethanbeschichtungen eingesetzt. Durch die reversible Blockierung der NCO-Gruppen ist die Herstellung von einkomponentigen Formulierungen, bestehend aus einem blockierten Polyisocyanat und einer NCO-reaktiven Verbindung, in der Regel ein Polyol, möglich, welche z.B. durch thermische Behandlung zum Polyurethan gehärtet werden können. Das Blockierungsmittel wird dabei freigesetzt und verbleibt danach mehr oder weniger in der Beschichtung. Besondere Bedeutung haben blockierte Polyisocyanate darüber hinaus bei der Herstellung von wässrigen Polyisocyanat- oder Polyurethan-Dispersionen sowie bei Pulverlacken. Eine Übersicht über die Chemie und die Anwendungen blockierter Polyisocyanate findet sich u.a. in Progress in Organic Coatings, 1999, 36, 148-172 und ebenda 2001, 41, 1-83.

Typische Blockierungsmittel für Polyisocyanate sind beispielsweise Phenole, Alkohole, Oxime, Pyrazole, Amine und CH-acide Verbindungen wie Malonsäurediethylester.

Die Blockierungsreaktion wird typischerweise durch Umsetzung der freien NCO-Gruppen mit den genannten Blockierungsmitteln in Anwesenheit von Katalysatoren wie Dibutylzinndilaurat oder Zinn(II)bis(2-ethylhexanoat) durchgeführt.

Für Beschichtungen, welche in Kontakt mit Lebensmitteln und/oder Trinkwasser eingesetzt werden sollen, sind in der Regel nur bestimmte Inhaltstoffe zugelassen, so dass die üblicherweise eingesetzten Blockierungsmittel nicht angewendet werden können. Aufgrund ihrer herausragenden Eigenschaften und der unproblematischen Applikation besteht jedoch großes Interesse daran 1K-Polyurethanbeschichtungen auch beispielsweise im Bereich der Doseninnenbeschichtungen (Can-Coating) einsetzen zu können.

Eine als Blockierungsmittel potentiell geeignete Verbindung, welche auch lebensmitteltechnisch zugelassen ist, ist 2,6-Di-tert-butyl-4-methylphenol (Jonol, BHT). Da sterisch gehinderte Phenole wie BHT jedoch nach anerkannter Meinung aufgrund der sterischen Hinderung in nicht ausreichendem Maße mit NCO-Gruppen reagieren, um eine ausreichende Blockierung von mehr als 50 % der NCO-Gruppen zu erreichen, werden sie bisher nicht als Blockierungsmittel verwendet. Diese Verbindungen werden typischerweise als Antioxidationsmittel verwendet, wobei sie sogar zur Stabilisierung von Polyisocyanaten mit freien NCO-Gruppen eingesetzt werden.

In US 5,064,902 findet sich in einer unspezifischen Liste von Blockierungsmitteln für Polyisocyanate auch 2,6-Di-tert-butyl-4-methylphenol, wobei allerdings kein Verfahren oder Katalysator beschrieben wird, mit dem eine ausreichende Reaktivität gegenüber freien NCO-Gruppen erreicht werden könnte, um ein befriedigendes Blockierungsergebnis zu erreichen. In wie weit sich mit BHT blockierte Polyisocyanate zur Herstellung von Beschichtungen oder Verklebungen eignen, die für den Kontakt mit Lebensmitteln und/oder Trinkwasser zugelassen sind, wird nicht beschrieben.

Auch in der WO 2004/046217 (Beispiel 8) wird die Blockierung eines Isocyanates mit 2,6-Di-tert-butyl-4-methylphenol beschrieben. Als Katalysator dient ein heterocyclisches Amin. Auch hier wird kein befriedigendes Blockierungsergebnis erreicht.

In WO 2004/058848 wird die Blockierung von Polyisocyanaten mittels CH-azider cyclischer Ketone beschrieben. Die Blockierung mit sterisch anspruchsvollen Phenolen wird nicht erwähnt.

Es wurde nun gefunden, dass sich Polyisocyanate, deren NCO-Gruppen zu mindestens 50 % mit sterisch anspruchsvollen Phenolen blockiert sind, sehr wohl herstellen lassen, wenn bestimmte Katalysatoren für die Blockierungsreaktion eingesetzt werden. Ferner können derartig blockierte Polyisocyanate zur Herstellung von 1K-Polyurethanbeschichtungen eingesetzt werden, die für den Kontakt mit Lebensmitteln und/oder Trinkwasser unbedenklich sind.

Die Verwendung von Polyisocyanaten, deren NCO-Gruppen zu mindestens 50 mol% mit sterisch gehinderten Phenolen blockiert sind, zur Herstellung von Beschichtungen, Verklebungen und/oder Dichtungen, die für den Kontakt mit Lebensmitteln und/oder Trinkwasser nach FDA 175.105 und 175.300 zugelassen sind, ist möglich.

Gegenstand der Erfindung ist ein Verfahren zur Herstellung von blockierten Polyisocyanaten, deren. NCO-Gruppen zu mindestens 50 mol-% mit sterisch gehinderten Phenolen blockiert sind, bei dem
a) ein oder mehrere organische Polyisocyanate mit
b) einem oder mehreren sterisch gehinderten Phenolen der allgemeinen Formel (I), 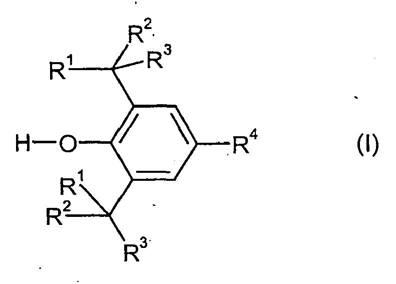 wobei
   - R¹, R² und R³: unabhängig voneinander Wasserstoff oder C₁-C₃-Alkyl-Reste sind und
   - R⁴: Wasserstoff oder ein C₁-C₁₂-Alkylrest ist,
   in Anwesenheit von
c) mindestens einem Katalysator ausgewählt aus der Gruppe bestehend aus
   i) Tetraorganoammonium- und -phosphoniumsalzen schwacher Säuren (pk_{S} ≥ 2,0), mit stickstoff bzw. phosphorgebundenen aliphatischen, cycloaliphatischen, araliphatischen und/oder aromatischen Resten
      und
   ii) Zink(II)-Verbindungen
   umgesetzt werden.

Sterisch gehindert bedeutet im Rahmen der vorliegenden Erfindung, dass die Phenole in 2 und 6-Stellung des aromatischen Ringes Substituenten aufweisen, welche aufgrund Ihrer räumlichen Größe die OH-Gruppe des phenolischen Ringes abschirmen und so zu einer verminderten Reaktivität führen. Solche Substituenten sind bevorzugt organische Reste mit mehr als 2, bevorzugt 3 bis 10 Kohlenstoffatomen.

Geeignete Polyisocyanate der Komponente a) sind alle an sich bekannten aliphatischen, cycloaliphatischen oder heterocyclischen organischen Isocyanate, bevorzugt Di- oder Polyisocyanate mit mindestens zwei Isocyanatgruppen sowie Gemische genannter Verbindungen. Beispiele für geeignete aliphatische Isocyanate sind Di- oder Triisocyanate wie z.B. Butandiisocyanat, Pentandiisocyanat, Hexandiisocyanat (Hexamethylendiisocyanat, HDI), 4-Isocyanatomethyl-1,8-octan-diisocyanat (Triisocyanatononan, TIN) oder cyclische Systeme, wie z.B. 4,4'-Methylenbis(cyclohexylisocyanat) (Desmodur^{®} W, Bayer AG, Leverkusen), 3,5,5-Trimethyl-1-isocyanato-3-isocyanatomethyl-cyclohexan (Isophorondiisocyanat, IPDI) sowie ω,ω'-Diisocyanato-1,3-dimethylcyclohexan (H₆XDI).

Ebenfalls geeignet im Sinne der Erfindung sind die an sich bekannten Folgeprodukte der genannten Isocyanate mit Biuret-, Isocyanurat-, Iminooxadiazindion-, Uretdion-, Allophanat und/oder Urethanstruktur.

Bevorzugt werden in das erfindungsgemäße Verfahren aliphatische Polyisocyanate mit mindestens zwei Isocyanatgruppen eingesetzt. Besonders bevorzugt sind dabei Hexandiisocyanat, 4,4'-Methylenbis(cyclohexylisocyanat) und Isophorondiisocyanat, sowie deren Folgeprodukte mit Uretdion-, Isocyanurat-, Iminooxadiazindion-, Allophanat- und/oder Biuretstruktur.

Die in b) eingesetzten sterisch anspruchsvollen oder gehinderten Phenole entsprechen der allgemeinen Formel (I), 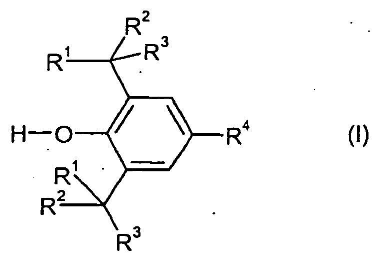 wobei
- R¹, R² und R³: unabhängig voneinander Wasserstoff oder C₁-C₃-Alkyl-Reste sind und
- R⁴: Wasserstoff oder ein C₁-C₁₂-Alkylrest ist.

Bevorzugte sterisch gehinderte Phenole der Komponente b) entsprechen der Formel (I), wobei
- R¹, R² und R³: gleichzeitig Wasserstoff oder ein Methylrest sind und
- R⁴: unabhängig von R¹, R² und R³ Wasserstoff oder ein Methylrest ist.

Besonders bevorzugte sterisch gehinderte Phenole der Komponente b) entsprechen der Formel (I), wobei
- R¹, R² und R³: für einen Methylrest und
- R⁴: unabhängig von R¹, R² und R³ Wasserstoff oder ein Methylrest ist.

Ganz besonders bevorzugt ist 2,6-Di-tert.-butyl-4-methylphenol (Jonol, BHT).

Bevorzugte Zink(II)-Verbindungen der Gruppe ii) sind Zink(II)halogenide und Zink(II)-Salze organischer Säuren der Formel Zn(II)(OOC-R)₂, wobei R ein gegebenenfalls verzweigter aliphatischer C₁-C₃₀-Rest ist.

Bevorzugt werden als Katalysatoren im erfindungsgemäßen Verfahren Zink(II)-Salze organischer Säuren der Formel Zn(II)(OOC-R)₂, wobei R ein gegebenenfalls verzweigter aliphatischer C₂-C₂₀-Rest ist, eingesetzt. Bevorzugte Zink(II)-Salze sind die der 2-Ethylhexansäure oder der Stearinsäure.

Bei dem erfindungsgemäßen Verfahren werden die Komponenten a) - c) sowie gegebenenfalls Lösungsmittel und/oder weitere Additive in einer beliebigen Reihenfolge vermischt und auf Temperaturen von 40°C bis 150°C, bevorzugt bei 60°C bis 120°C, besonders bevorzugt bei 60°C bis 100°C, erwärmt. Das Erwärmen wird dann solange fortgesetzt, bis der gewünschte NCO-Gehalt erreicht ist.

In einer bevorzugten Ausführungsform des erfindungsgemäßen Verfahrens wird das Polyisocyanat, gegebenenfalls gelöst in einem Lösungsmittel, im Reaktionsgefäß vorgelegt und gegebenenfalls unter Rühren auf 40 bis 150°C, bevorzugt auf 60 bis 120°C und besonders bevorzugt auf 60 bis 100°C erwärmt. Nach Erreichen der gewünschten Temperatur wird dann unter Rühren das Blockierungsmittel und der Katalysator, unerheblich in welcher Reihenfolge und gegebenenfalls beide gelöst in einem Lösungsmittel, zugegeben und solange gerührt, bis der gewünschte NCO-Gehalt erreicht ist. Danach wird das Reaktionsgemisch abgekühlt und gegebenenfalls noch mit einem Reaktionsstopper, wie z.B. Benzoylchlorid zur Deaktivierung des Katalysators versehen.

In einer weiteren bevorzugten Ausführungsform des erfindungsgemäßen Verfahrens wird wie vorstehend beschrieben verfahren mit der Abwandlung, dass das Blockierungsmittel vorgelegt und das Polyisocyanat zugegeben wird. Die Zugabe des Katalysators kann dabei vor, während oder nach der Zugabe des Phenols erfolgen. Alle Komponenten können wie zuvor gelöst in einem geeigneten Lösungsmittel eingesetzt werden.

Die vorstehend genannten Katalysatoren werden bevorzugt in Mengen von 0,001 Gew.-% bis 1 Gew.-% besonders bevorzugt 0,01 Gew.-% bis 1 Gew.-%, bezogen auf die gesamte Reaktionsmischung, eingesetzt.

Durch den Einsatz der erfindungsgemäß einzusetzenden Katalysatoren in den vorstehend genannten Mengen wird erreicht, dass wenigstens 50 Mol-%, bevorzugt wenigstens 75 Mol-%, der NCO-Gruppen eines Polyisocyanats mit einem sterisch anspruchsvollen Phenol der Formel (I) blockiert werden.

Geeignete inerte Lösungsmittel bzw. Lacklösungsmittel sind beispielsweise Ethylacetat, n-Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel. Die Umsetzung kann jedoch auch ohne Lösungsmittel durchgeführt werden.

Die Menge des eingesetzten Blockierungsmittels der Formel (I) richtet sich in erster Linie danach, wie hoch der Blockierungsgrad der NCO-Gruppen mit diesem Blockierungsmittel sein soll. Um den technisch sinnvollen Blockierungsgrad von wenigstens 50 mol-% zu erreichen, wird das Blockierungsmittel in entsprechender Menge von mindestens 50 mol-% bezogen auf alle vorliegenden freien NCO-Gruppen eingesetzt. Bevorzugt werden aber 50 bis 150 mol-%, besonders bevorzugt 95 bis 110 mol-% des Phenols der Formel (I) bezogen auf die Menge aller vorliegenden freien NCO-Gruppen eingesetzt.

Der Grad der NCO-Gruppen des nach dem erfindungsgemäßen Verfahren erhaltenen Polyisocyanats, welche mit dem in b) eingesetzten Blockierungsmittel blockiert sind, beträgt wenigstens 50 mol% bezogen auf alle NCO-Gruppen, bevorzugt wenigstens 90 mol%, besonders bevorzugt mindestens 95 mol%.

Die erfindungsgemäß hergestellten, phenolisch blockierten Polyisocyanate werden typischerweise in Kombination mit Polyolen wie Polyesterpolyen, Polyetherpolyolen oder Polyacrylatpolylen zur Herstellung von Polyurethan-, Polyharnstoff oder Polyurethanharnstoff-Beschichtungen eingesetzt.

Die erfindungsgemäß hergestellten, blockierten Polyisocyanate werden dazu gegebenenfalls in einem geeigneten Lösungsmittel gelöst, mit ein oder mehreren Polyolen gemischt und danach thermisch behandelt. Selbstverständlich können weitere Zusatzstoffe wie Farbstoffe, Pigmente, Additive und Katalysatoren zu diesen Mischungen gegeben werden.

Die Applikation solcher Formulierungen kann nach allen gängigen Techniken wie z.B. Rakeln, Gießen, Fluten, Sprühen, Rollen oder Streichen erfolgen.

Diese Beschichtungen werden insbesondere dort eingesetzt, wo Kontakt zu Lebensmitteln oder Trinkwasser besteht. Genannt sei hier beispielsweise die Beschichtung von Verpackungsmaterialien oder Verarbeitungs-/Förderanlagen für Lebensmittel oder Trinkwasser. Diese können z.B. aus Metallen, wie Eisen oder Aluminium, bestehen.

Insbesondere sei die Beschichtung von Dosen im Coil-Coat-Verfahren genannt.

### Beispiele

### Vorbemerkung:

Soweit nicht abweichend angegeben sind alle Prozentangaben als Gewichtsprozent zu verstehen.

Die Bestimmung der NCO-Gehalte erfolgte mittels Rücktitration von im Überschuß zugesetztem Di-n-butylamin mit 0,1 N Salzsäure unter Verwendung von Bromphenolblau als Indikator, wobei die Probe zuvor in 50 ml Aceton gelöst wurde.

**Desmodur^{®} N 3300:** trimerisiertes 1,6-Hexandiisocyanat, NCO-Gehalt 21,8 Gew.-% und Viskosität 3 000 mPas (23°C), Bayer MaterialScience AG, Leverkusen, DE

**Desmodur^{®} Z 4470:** trimerisiertes Isophorondiisocyanat, 70 %ig gelöst in n-Butylacetat, NCO-Gehalt 11,9 Gew.-%, Bayer MaterialScience AG, Leverkusen, DE

### Vergleichsbeispiel 1:

33,2 g eines trimerisierten 1,6-Hexandiisocyanats (Desmodur^{®} N 3300) mit einem NCO-Gehalt von 21,8 Gew.-% und einer Viskosität von 3000 mPas (23°C) wurden in 75 g n-Butylacetat gelöst und unter Rühren auf 80°C erwärmt. Dann wurden portionsweise 41,8 g 2,6-Di-tert.-butyl-4-methylphenol und schließlich noch 20 mg Dibutylzinndilaurat zugegeben. Nach 47 Stunden Rühren bei 80°C lag der NCO-Gehalt 4,52 Gew.-% , d.h. der eingesetzte Katalysator war unwirksam (berechneter NCO-Gehalt vor Katalysatorzugabe: 4,83 Gew.-%).

### Vergleichsbeispiel 2:

Analog dem Vergleichsbeispiel 1, wurden 33,2 g Desmodur^{®} N 3300 mit 41,8 g 2,6-Di-tert-butyl-4-methylphenol (Jonol) in n-Butylacetat und in Gegenwart von 20 mg Zinn(II)bis(2-ethylhexanoat) umgesetzt. Nach 47 Stunden bei 80°C betrug der NCO-Gehalt 4,44 Gew.-%, d.h. auch diese Zinn-Verbindung war katalytisch unwirksam.

### Beispiel 1

Analog dem Vergleichsbeispiel 1, wurden 33,2 g Desmodur^{®} N 3300 mit 41,8 g 2,6-Di-tert.-butyl-4-methylphenol (Jonol) in n-Butylacetat und in Gegenwart von 20 mg Zink(II)bis(2-ethylhexanoat) umgesetzt. Nach 47 Stunden bei 80°C betrug der NCO-Gehalt 0,6 Gew.-%.

### Beispiel 2:

Analog Beispiel 1 wurde 33,2 g Desmodur^{®} N 3300 mit 41,2 g 2,6-Di-tert.-butyl-4-methylphenol (Jonol) in n-Butylacetat und in Gegenwart von Zink(II)bis(2-ethylhexanoat) umgesetzt:

In der nachstehenden Tabelle sind die jeweils eingesetzten Gehalte des Katalysators, die damit erreichten NCO-Gehalte, die Restgehalte an freiem 2,6-Di-tert.-butyl-4-methylphenol (bestimmt mittels GC) sowie die Reaktionszeiten angegeben.

| Katalysatormenge bezogen auf die Reaktionsmischung | Reaktionszeit [h] | NCO-Gehalt [Gew.-%] | Restgehalt an Jonol [Gew.-%] |
|---|---|---|---|
| 200 ppm | 30 | 0,64 | 7,9 |
| 500 ppm | 30 | 0,55 | 7,9 |

(Der berechnete Restgehalt an Jonol lag unter Berücksichtigung der erreichten NCO-Gehalte bei 6,1%).

### Beispiel 3

Eine Mischung aus 40 g (0,18 mol) Jonol und 360 g (2,14 mol) HDI wurde bei 60°C unter Rühren mit 0,26 g (0,43 mmol) einer 50 %igen Lösung von Tetrabutylphosphonium-hydrogendifluorid [Bu₄P]^{⊕} [HF₂]^{⊖} in iso-Propanol versetzt, wobei unter beträchtlicher Exothermie (Anstieg der Innentemperatur der Reaktionsmischung auf 95°C) und Abfall des NCO-Gehaltes auf 39,4 % innerhalb von 5 Minuten neben geringen Anteilen an HDI-Isocyanuraten und -Urethanen das Allophanat der Formel (III) 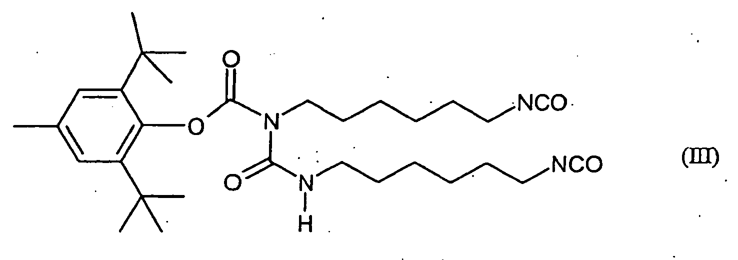 sowie seine höheren Homologen als Hauptprodukttyp gebildet wurden. Nach Zugabe von 0,2 g (0,5 mmol) einer 40 %igen, iso-propanolischen p-Toluolsulfonsäurelösung zur Katalysatordesaktivierung und anschließender Dünnschichtdestillation wurden 114,7 g eines farblosen Harzes mit den folgenden Daten erhalten:

| | |
|---|---|
| Viskosität: | 13.600 mPas/23° |
| NCO-Gehalt: | 15,3 % |
| Farbzahl: | 42 Apha |
| HDI-Restgehalt: | 0,01% |

Jonol war nicht nachweisbar (< 10 ppm).

## Patentansprüche

1. Verfahren zur Herstellung von blockierten Polyisocyanaten, deren NCO-Gruppen zu mindestens 50 mol-% mit sterisch gehinderten Phenolen blockiert sind, bei dem
a) ein oder mehrere organische Polyisocyanate mit
b) einem oder mehreren sterisch gehinderten Phenolen der allgemeinen Formel (I), 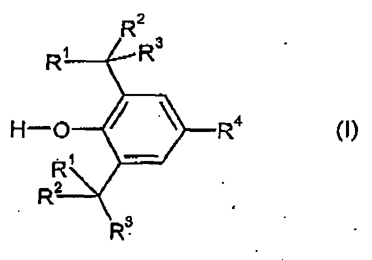 wobei
R¹, R² und R³ unabhängig voneinander Wasserstoff oder C₁-C₃-Alkyl-Reste sind und
R⁴ Wasserstoff oder ein C₁-C₁₂-Alkylrest ist,
in Anwesenheit von
c) mindestens einem Katalysator ausgewählt aus der Gruppe bestehend aus
i) Tetraorganoammonium- und -phosphoniumsalzen schwacher Säuren (pk_{S} ≥ 2,0), mit stickstoff- bzw. phosphorgebundenen aliphatischen, cycloaliphatischen, araliphatischen und/oder aromatischen Resten
und
ii) Zink(II)-Verbindungen
umgesetzt werden.

2. Verfahren zur Herstellung von blockierten Polyisocyanaten gemäß Anspruch 1, **dadurch gekennzeichnet, dass** als sterisch gehindertes Phenol in Komponente b) 2,6-Di-tert.-butyl-4-methylphenol (Jonol, BHT) eingesetzt wird.

3. Verfahren zur Herstellung von blockierten Polyisocyanaten gemäß Anspruch 1 oder 2, **dadurch gekennzeichnet, dass** als Katalysator in Komponente c) eine Verbindung ausgewählt aus der Gruppe bestehend aus Zink(II)-Salzen der 2-Ethylhexansäure oder Zink(II)-Salzen der Stearinsäure.

## Claims

1. Process for preparing blocked polyisocyanates at least 50 mol% of whose NCO groups have been blocked with sterically hindered phenols, which comprises reacting
a) one or more organic polyisocyanates with
b) one or more sterically hindered phenols of the general formula (I) 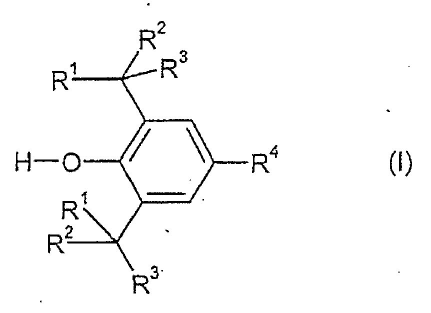 where
R¹, R², and R³ independently of one another are hydrogen or C₁-C₃ alkyl radicals and
R⁴ is hydrogen or a C₁-C₁₂ alkyl radical,
in the presence of
c) at least one catalyst selected from the group consisting of
i) tetraorganoammonium and tetraorganophosphonium salts of weak acids (pkₐ ≥ 2.0), having nitrogen-attached and/or phosphorus-attached aliphatic, cycloaliphatic, araliphatic and/or aromatic radicals and
ii) zinc(II) compounds.

2. Process for preparing blocked polyisocyanates according to Claim 1, **characterized in that** 2,6-di-tert-butyl-4-methylphenol (ionol, BHT) is used as sterically hindered phenol in component b).

3. Process for preparing blocked polyisocyanates according to Claim 1 or 2, **characterized in that** a compound selected from the group consisting of zinc(II) salts of 2-ethylhexanoic acid or zinc(II) salts of stearic acid is used as catalyst in component c).

## Revendications

1. Procédé de production de polyisocyanates bloqués dont les groupes NCO sont bloqués à raison d'au moins 50 mol % avec des phénols à empêchement stérique, dans lequel
a) un ou plusieurs polyisocyanates organiques sont mis à réagir avec
b) un ou plusieurs phénols à empêchement stérique de formule générale (I), 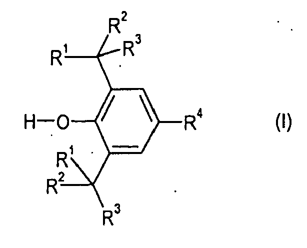 où
R¹, R² et R³ sont indépendamment les uns des autres l'hydrogène ou des groupements C₁-C₃-alkyle
et
R⁴ est l'hydrogène ou un groupement C₁-C₁₂-alkyle,
en présence de
c) au moins un catalyseur choisi dans le groupe consistant en
i) les sels de tétraorganoammonium et -phosphonium d'acides faibles (pk ≥ 2,0), avec des groupements aliphatiques, cycloaliphatiques, araliphatiques et/ou aromatiques liés à l'azote ou au phosphore
et
ii) les composés du zinc (II).

2. Procédé de production de polyisocyanates bloqués selon la revendication 1, **caractérisé en ce que** le 2,6-di-tert.butyl-4-méthylphénol (Ionol, BHT) est utilisé comme phénol à empêchement stérique dans le composant b).

3. Procédé de production de polyisocyanates bloqués selon la revendication 1 ou 2, **caractérisé en ce qu'**un composé choisi dans le groupe consistant en les sels de zinc (II) de l'acide 2-éthylhexanoïque ou les sels de zinc (II) de l'acide stéarique est utilisé comme catalyseur dans le composant c).
